# EUROPÄISCHE PATENTSCHRIFT

(11) **EP 3 371 004 B1**
(45) Veröffentlichungstag und Bekanntmachung des Hinweises auf die Patenterteilung: **01.12.2021**
(21) Anmeldenummer: 16784168.3
(22) Anmeldetag: 17.10.2016
(51) Int. Cl.: B60Q 1/26, B60R 1/12, F21S 43/14, F21S 43/239, F21S 43/245, F21S 43/27, F21S 45/50

(54) **FAHRZEUGAUSSENSPIEGEL MIT INTEGRIERTER SIGNALLEUCHTENEINHEIT, SOWIE VERFAHREN ZUR HERSTELLUNG EINES FAHRZEUGAUSSENSPIEGELS MIT INTEGRIERTER SIGNALLEUCHTENEINHEIT**
VEHICLE EXTERIOR MIRROR COMPRISING INTEGRATED SIGNAL LIGHT UNIT, AND METHOD FOR PRODUCING A VEHICLE EXTERIOR MIRROR COMPRISING INTEGRATED SIGNAL LIGHT UNIT
RÉTROVISEUR EXTÉRIEUR DE VÉHICULE AVEC UNITÉ DE FEU DE SIGNALISATION INTÉGRÉE ET PROCÉDÉ DE FABRICATION D'UN RÉTROVISEUR EXTÉRIEUR DE VÉHICULE AVEC UNITÉ DE FEU DE SIGNALISATION INTÉGRÉE

(30) Priorität: 04.11.2015 DE 102015221605
(43) Veröffentlichungstag der Anmeldung: 12.09.2018
(73) Patentinhaber: Magna Mirrors Holding GmbH, 63877 Sailauf (DE)
(72) Erfinder: ROUARD, Denis, 63930 Neunkirchen (DE); STAPP, Armin, 63934 Röllbach (DE)
(74) Vertreter: Völger, Silke Beatrix
(86) Internationale Anmeldenummer: PCT/EP2016/074884
(87) Internationale Veröffentlichungsnummer: WO 2017/076623

(56) Entgegenhaltungen:
- WO-A2-2004/114736
- DE-B3-102012 108 480
- FR-A1- 2 630 526
- JP-A- 2007 250 290
- US-A1- 2003 081 423
- US-A1- 2005 063 181
- US-A1- 2012 039 082

## Beschreibung

Die vorliegende Erfindung betrifft einen Fahrzeugaußenspiegel mit integrierter Signalleuchteneinheit und ein Verfahren zur Herstellung eines Fahrzeugaußenspiegels mit integrierter Signalleuchteneinheit.

Es ist aus den Dokumenten EP 0 941 892 A2, EP 1 698 515 A2 und EP 0 858 932 A2 bekannt, eine Leuchteneinheit zur Fahrtrichtungsanzeige in die seitlich am Kraftfahrzeug angeordneten Außenspiegel zu integrieren. Für diese sogenannten Seitenblinkleuchten ist vorgeschrieben, dass das Licht entgegen der Fahrtrichtung in einem Winkelbereich von 5 bis 60° ausgestrahlt wird. Zur besseren Erkennbarkeit der Leuchtfunktion derartiger Leuchten wird zusätzlich eine Lichtabstrahlung in Fahrtrichtung gewünscht.

Dies wird beispielsweise durch die aus dem Dokument EP 0 941 892 A2 bekannte Anordnung von Leuchtdioden, sog. LED's, als Leuchtmittel erzielt, die im Spiegelgehäuse angeordnet sind und Licht in den geforderten Winkelbereichen und Richtungen ausstrahlen. Des Weiteren ist es aus dem Dokument DE 20 2005 014 267 U1 bekannt bei einer Signalleuchteneinheit LED's als Leuchtmittel einzusetzen, die das Licht in Lichtleitkörper einkoppeln. Die verwendeten Lichtleitkörper sind dabei als stabförmige Elemente ausgebildet, und derart angeordnet und ausgestaltet, dass das eingekoppelte Licht zu einer großflächigen Lichtaustrittsfläche geführt wird. Diese Lichtaustrittsfläche erstreckt sich häufig bandförmig von einer dem Kraftfahrzeug zugewandten Stelle des Spiegelgehäuses zu einer außen liegenden dem Kraftfahrzeug abgewandten Stelle im Spiegelgehäuse. Innerhalb des Spiegelgehäuses ist in einem Bereich hinter der Lichtaustrittsfläche eine Abdeckschale angeordnet. Diese Abdeckschale weist einen im Wesentlichen umlaufenden Rand auf, und schließt an einen lichtundurchlässigen Abschnitt des Spiegelgehäuses an. Durch diese Ausführung gibt die Abdeckschale einen Einbauraum im Innenraum des Spiegelgehäuses zur Aufnahme der Leuchtmittel, Platine und des Lichtleiterkörpers vor. Der Gehäuseabschnitt in den die Lichtaustrittsfläche gebildet ist und die Abdeckschale werden zur Erzielung eines luft- und feuchtedichten Einbauraums an den Fügekanten miteinander verschweißt. Hierbei tritt das Problem auf, dass es bei dem Schweißprozess zu Undichtigkeiten zwischen den beiden Gehäusehälften kommen kann.

Aus der US2012/039082 A1 ist ein Fahrzeugaußenspiegel mit integrierter Signalleuchteneinheit bekannt. Die Signalleuchteneinheit weist ein zweigeteiltes Gehäuse auf, welches einen Innenraum zur Aufnahme einer Platine und von LEDs vorgibt. Das Gehäuse weist weiterhin eine Durchgangsöffnung auf, in die ein Lichtleitkörper eingesteckt und lösbar gehalten ist.

Aufgabe der vorliegenden Erfindung ist es unter einem ersten Aspekt, eine Signalleuchteneinheit für Kraftfahrzeuge derart weiterzubilden, dass die Leuchteneinheit kostengünstig herstellbar und einfach zu montieren ist. Des Weiteren sollen die Einzelteile der Leuchteneinheit einfach austauschbar sein.

Diese Aufgabe löst die vorliegende Erfindung durch einen Fahrzeugaußenspiegel mit integrierter Signalleuchteneinheit für Kraftfahrzeuge mit den in Patentanspruch 1 angegebenen Merkmalen.

Unter einem zweiten Aspekt ist es eine Aufgabe der vorliegenden Erfindung ein Verfahren zur Herstellung eines Fahrzeugaußenspiegels mit integrierter Signalleuchteneinheit anzugeben, welches einfach und kostengünstig durchführbar ist, wobei insbesondere eine einfache Austauschbarkeit der Einzelteile gewährleistet sein soll.

Diese Aufgabe unter dem zweiten Aspekt wird durch die Merkmale des Anspruchs 4 gelöst.

Die Platine sowie die zugehörigen Anschlusselemente und die LED' s als Leuchtmittel werden zur Abdichtung in einem Gehäuse aufgenommen. Das Gehäuse ist zweiteilig ausgeführt, wobei die beiden Gehäusehalbschalen über eine Clipsverbindung zusammengefügt werden. Durch die Ausbildung einer Clipsverbindung zwischen den Gehäusehalbschalen kann eine einfache und schnelle Montage der Leuchteneinheit erreicht werden. Der Lichtleitkörper wird in einfacher und austauschbarer Art und Weise in eine Gehäuseöffnung des oben genannten Gehäuses eingesteckt und festgeklemmt. Aufgrund der Clipsverbindung der Gehäusehälften und der Klemmverbindung des Lichtleitkörpers sind eine einfache und kostengünstige Montage und ein einfacher Austausch von Einzelteilen möglich.

Erfindungsgemäß ist vorgesehen, dass die Gehäusehälften im Bereich der zueinander zugewandten Fügekanten mit einer Dichtung versehen sind. Hierdurch erfüllt die Leuchteneinheit die Anforderungen an Feuchtedichtigkeit. Die Dichtung kann aus einem flexiblen Kunststoff ausgeführt sein. Es kann ebenfalls die Ausgestaltung einer Labyrinthdichtung vorgesehen werden, was aber nicht erfindungsgemäß ist. Zwischen Lichtleitkörper und Gehäuseöffnung ist ebenfalls eine Dichtung vorgesehen, die ein Eindringen von Feuchtigkeit in das Gehäuseinnere verhindert.

Erfindungsgemäß sind die Gehäusehälften mit Scharnierverbindung und Clipsanordnung und den Dichtelementen in einem 2k- Spritzgießverfahren einfach herstellbar. Vorteilhafte Ausgestaltungen der vorliegenden Erfindung sind in den Unteransprüchen angegeben.

Die Erfindung wird nachfolgend anhand in den Zeichnungen schematisch dargestellter Ausführungsbeispiele beschrieben.

Es zeigt:
Fig. 1 eine Ansicht eines Fahrzeugaußenspiegels mit integrierter Signalleuchteneinheit; und
Fig. 2 einen Querschnitt durch eine erfindungsgemäße Signalleuchteneinheit.

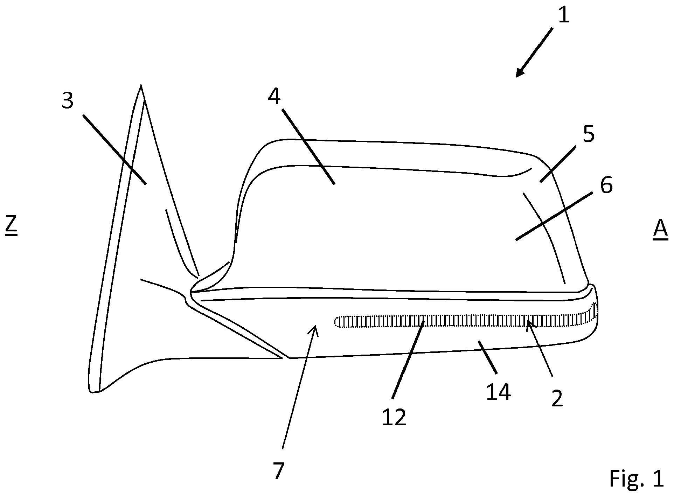

Die Figur 1 zeigt in einer Vorderansicht einen Fahrzeugaußenspiegel 1 mit integrierter Signalleuchteneinheit 2, der einen Spiegelfuß 3 sowie einen Spiegelkopf 4 umfasst. Der Fahrzeugaußenspiegel 1 wird in bekannter Weise an der Fahrer- bzw. Beifahreraußenseite des Kraftfahrzeugs befestigt. Der Spiegelkopf 4 ist dabei verstellbar bzw. klappbar an dem Spiegelfuß 3 angeordnet und weist ein Spiegelgehäuse 5 aus einem thermoplastischen Kunststoffmaterial auf. In eine erste Aufnahmeöffnung des Spiegelgehäuses 5 ist eine Spiegelscheibe eingesetzt, die üblicherweise auf einer im Innenraum des Spiegelgehäuses 5 angeordneten verstellbaren nicht dargestellten Halterung gelagert ist. Die Spiegelscheibe ist in der Darstellung der Figur 1 nicht sichtbar, da der Fahrzeugaußenspiegel von der Vorderansicht gezeigt ist. Aus der Figur 1 ist zu ersehen, dass das Spiegelgehäuse 5 zweiteilig ausgebildet ist und einen Spiegelgehäuseabschnitt 6 und eine Gehäuseschale 7 umfasst. In die Gehäuseschale 7 ist die Signalleuchteneinheit 2 integriert. Die Signalleuchteneinheit 2 erstreckt sich dabei über annähernd die gesamte Breite der Gehäuseschale 7 ausgehend von einer dem Fahrzeug zugewandten Seite Z des Spiegelgehäuses 5 bis zu einer äußeren dem Fahrzeug abgewandten Seite A des Spiegelgehäuses 5.

In einer weiteren Ausführungsform des Fahrzeugaußenspiegels 1 können die Gehäuseschale 7 und der Spiegelgehäuseabschnitt 6 auch einteilig als Spiegelgehäuse 5 ausgebildet sein.

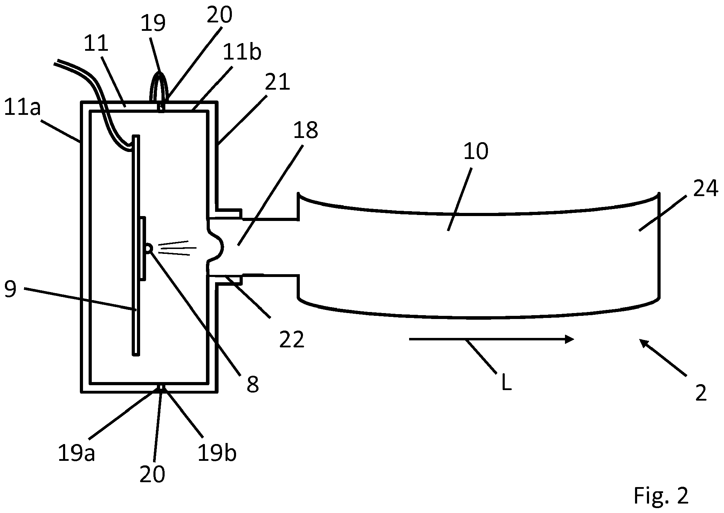

Die in der Figur 2 dargestellte Signalleuchteneinheit 2 umfasst im Wesentlichen ein zweiteilig ausgeführtes Gehäuse 11 aus thermoplastischen Kunststoffmaterial, Leuchtmittel 8, eine Platine 9 mit elektrischen Anschlüssen sowie einen Lichtleiter 10. Die Signalleuchteneinheit 2 ist im Gehäuseinneren der Gehäuseschale 7 aufgenommen. Die Gehäuseschale 7 wird beispielsweise durch ein Zweikomponenten Spritzgießverfahren hergestellt und weist eine im Bereich der sichtbaren Außenfläche ununterbrochene äußere transluzente Schicht auf. Die Gehäuseschale 7 ist derart ausgebildet, dass sie einen lichtdurchlässigen Fensterabschnitt 12 und einen einstückig damit ausgeführten lichtundurchlässigen weiterer Abschnitt 14 aufweist. Dieser lichtundurchlässige weitere Abschnitt 14 ist eine im Bereich des Fensterabschnitts 12 unterbrochene dunkel eingefärbte innere Schicht aus einem Kunststoffmaterial. Der lichtdurchlässige Fensterabschnitt 12 ist, wie es aus der Figur zu erkennen ist, als schmaler bandförmiger Abschnitt ausgestaltet und besteht aus einem transparenten oder aus einem getönten d.h. teilweise transparenten Kunststoffmaterial. Der bandförmige lichtdurchlässige Fensterabschnitt 12 bildet den Bereich des Lichtdurchtritts des Lichtes der Signalleuchteneinheit 2. In einer alternativen Ausgestaltung kann der lichtdurchlässige Fensterabschnitt auch als separates Gehäusebauteil ausgeführt sein, welches in das Spiegelgehäuse eingefügt wird.

Innerhalb der Gehäuseschale 7 ist in einem Bereich hinter dem Fensterabschnitt 12 das Gehäuse 11 sowie der längliche Lichtleiter 10 derart angeordnet, dass das in den Lichtleiter eingekoppelte Licht durch den Lichtleiter transportiert wird und durch den Lichtdurchtritt strahlt. Wie es aus der Darstellung der Figur 2 ersichtlich ist, gibt das Gehäuse 11 einen Einbauraum 17 zur Aufnahme der Leuchtmittel 8 und der Platine 9 vor. Zur schnellen Montage und Demontage der Bauteile der Signalleuchteneinheit 12 ist das Gehäuse zweiteilig ausgeführt und wird in einem Zweikomponenten Spritzgussverfahren aus Kunststoff hergestellt. Hierbei besteht das Gehäuse 11 aus zwei Gehäusehalbschalen 11a, 11b die über ein Filmscharnier 19 miteinander verbunden sind. Weiterhin ist eine Clipsverbindung vorgesehen, die ein schnelles Verschließen und Öffnen der Gehäusehalbschalen zu einem luft- und feuchtedichten Gehäuse 11 mit einem Innenraum 17 ermöglicht. Clipsverbindungen sind dem Fachmann bekannt, auf eine Darstellung in den Zeichnungen und eine Beschreibung wird daher verzichtet. Längs der aufeinanderliegenden Fügekanten 19a, 19b der Gehäusehalbschalen 11a, 11b ist eine Dichtung 20 vorgesehen. Bei der Herstellung des Gehäuses 11 in einem Zweikomponenten Spritzgießverfahren werden dabei die Gehäusehalbschalen aus einem Polypropylen (PP) und die umlaufenden Dichtungen 20 aus einem TPE gespritzt. In eine der beiden Gehäusehalbschalen 11 ist in die Stirnfläche 21 eine durchgehende Öffnung 22 eingebracht. Die die Öffnung 22 begrenzenden Wand ist ebenfalls mit einer Dichtung versehen. Wie obenstehend bereits erörtert, wird diese Dichtung ebenfalls bei dem Herstellverfahren des 2K Spritzgießens angespritzt. In die Öffnung 22 des Gehäuses 11 ist ein Endbereich des Lichtleiters 10 dichtend eingefügt. Dieser Endbereich weist einen Einkoppelabschnitt 18 auf. Wie es aus der Darstellung der Figur 2 ersichtlich ist, ist in dem Innenraum 17 des Gehäuses die Platine 9 angeordnet. Auf der Platine 9 ist als Lichtquelle 8 eine LED angeordnet, die ihr Licht in den Einkoppelabschnitt 18 des zugeordneten Lichtleiters 10 einstrahlt. Der Einkoppelabschnitt 18 kann in an sich bekannter Weise als optisch wirksame Grenzfläche zur Bündelung ausgestaltet sein.

Der Lichtleiter 10 ist länglich ausgebildet und weist eine hauptsächliche Erstreckung in einer Längsrichtung L auf, die durch einen Pfeil angezeigt ist und erstreckt sich im Einbauraum hinter dem transparenten Fensterabschnitt 12.

Der Lichtleiter 10 weist Streustrukturen auf, die eine Abstrahlung des in den Lichtleiter eingekoppelten ersten Teilstrahls des Lichts durch den dem Lichtleiter 10 zugeordneten transparenten Fensterabschnitt 12 in Fahrtrichtung nach außen bewirken. Die hierfür notwendigen Streustrukturen sind üblicherweise auf der Rückseite des Lichtleiters 10 angeordnet. Das dort auftreffende Licht des ersten Teilstrahls wird an den Streustrukturen reflektiert und durch den dem Lichtleiter 10 zugeordneten transparenten Fensterabschnitt 12 in Fahrtrichtung nach außen abgestrahlt. Ein zweiter Teilstrahl des in den Lichtleiter 10 eingekoppelten Lichtes wird durch den gesamten Lichtleiter 10 in seine Längsrichtung L geleitet und entgegen der Fahrtrichtung an einem Auskoppelabschnitt 24 ausgestrahlt. Der Auskoppelabschnitt 24 befindet sich vorliegend am dem zum Einkoppelabschnitt 18 gegenüber liegenden Endbereich.

In einer Weiterbildung, die aber nicht ein Teil dieser Erfindung ist, kann die Dichtung im Bereich der Fügekanten und der Durchtrittsöffnung auch als separate Dichtung ausgeführt werden und aus einem flexiblen Kunststoff bestehen. Die Dichtung kann als Labyrinthdichtung ausgeführt werden. Alternativ kann das gesamte Gehäuse gegen Feuchtigkeitseinflüsse abgedichtet werden oder es kann eine Abdichtung des kompletten Spiegelgehäuses vorgesehen sein. Auch diese zwei Beispiele stellen diese Erfindung nicht dar.

In einer alternativen Ausgestaltung kann auf der dem Fensterabschnitt gegenüberliegenden Seite des Lichtleiters 10 ein bandförmiges Element angeordnet sein, welches mit einer reflektierenden Beschichtung versehen ist. Als bandförmiges Element kann auch eine streifenförmige Aluminiumfolie vorgesehen sein.

## Patentansprüche

1. Fahrzeugaußenspiegel (1) mit integrierter Signalleuchteneinheit (2), aufweisend eine Gehäuseschale (7) aus thermoplastischem Kunststoffmaterial, wobei die Gehäuseschale (7) einen lichtdurchlässigen Fensterabschnitt (12) aufweist und einen Innenraum zur Aufnahme der Signalleuchteneinheit (2) im Bereich des lichtdurchlässigen Fensterabschnitts (12) umfasst, wobei die Signalleuchteneinheit (2) einen länglichen Lichtleitkörper und eine Anzahl von zugeordneten Leuchtmitteln zum Beleuchten eines Einkoppelabschnitts des zugeordneten Leuchtmittels aufweist, wobei die Signalleuchteneinheit weiterhin ein Gehäuse (11) aus thermoplastischem Kunststoffmaterial aufweist, welches einen Innenraum zur Aufnahme zumindest einer Platine (9) und der Anzahl von Leuchtmitteln (8) vorgibt, wobei das Gehäuse (11) zweiteilig ausgeführt ist und zwei Gehäusehalbschalen (11a, 11b) umfasst, und wobei das Gehäuse (11) weiterhin eine Durchgangsöffnung (22) aufweist, und der Lichtleitkörper (10) mit einem den Einkoppelabschnitt (18) aufweisenden ersten Endbereich in der Durchgangsöffnung (22) lösbar gehalten ist, **dadurch gekennzeichnet, dass** die beiden Gehäusehalbschalen (11a, 11b) über eine Scharnieranordnung verbunden und über eine Clipsverbindung verschließ- und öffenbar ausgeführt sind, wobei die Gehäusehälften (11a, 11b) im Bereich der einander zugewandten Fügekanten mit einer Dichtung (20) versehen sind und wobei die Durchgangsöffnung (22) mit einer Dichtung versehen ist, und wobei das Gehäuse (11) und die Dichtungen (20,-) durch ein Zweikomponenten Spritzgießverfahren hergestellt sind und die Gehäusehalbschalen (11a, 11b) aus einem Polypropylen und die Dichtungen (20) der Fügekanten und die Dichtung im Bereich der Durchtrittsöffnung (22) aus einem thermoplastischen Elastomer (TPE) ausgeführt sind.

2. Fahrzeugaußenspiegel (1) mit integrierter Signalleuchteneinheit (2) nach Anspruch 1, wobei der Lichtleitkörper (10) mit einer Auskoppelstruktur ausgebildet ist.

3. Fahrzeugaußenspiegel (1) mit integrierter Signalleuchteneinheit (2) nach einem der vorangehenden Ansprüche, wobei auf der dem lichtdurchlässigen Fensterabschnitt (12) gegenüberliegenden Bereich des Lichtleitkörpers (10) ein bandförmiges Element mit einer Reflexionsschicht angeordnet ist, die vorzugsweise als reflektierende Folie ausgeführt ist.

4. Verfahren zum Herstellen eines Fahrzeugaußenspiegels (1) mit integrierter Signalleuchteneinheit (2) nach Anspruch 1 mit den folgenden Verfahrensschritten:
a) Herstellen eines Gehäuses umfassend zwei Gehäusehalbschalen (11a, 11b) in einem Spritzgießverfahren, wobei die Gehäusehalbschalen über eine angespritzte Scharnieranordnung und Clipsverbindung, schließ- und öffenbar ausgeführt sind, und wobei eine Gehäusehalbschale (11b) mit einer Durchtrittsöffnung (22) versehen wird, und wobei im Bereich der Fügekanten der Gehäusehalbschalen (11a, 11b) und im Bereich der Durchtrittsöffnung (22) Dichtungen in einem Zweikomponenten-Spritzgußverfahren angespritzt werden.
c) Bereitstellen einer Platine (9) mit einem darauf angeordneten Leuchtmittel (8)
d) Bereitstellen eines Lichtleitkörpers (10) mit einem endseitig angeordneten Einkoppelabschnitt (18)
e) Einbringen der Platine (9) mit Leuchtmittel (8) in einen Innenraum (17) der zwischen den Gehäusehälften (11a, 11b) liegt,
f) Verschließen der Gehäusehälften zu einem luftdichten Gehäuse (11) über die Clipsverbindung
g) Einstecken des Einkoppelabschnitts (18) des Lichtleitkörpers (10) in die Durchtrittsöffnung

## Claims

1. Vehicle exterior mirror (1) comprising integrated signal light unit (2), having a housing shell (7) composed of thermoplastic material, wherein the housing shell (7) has a light-permeable window portion (12) and comprises an interior space for receiving the signal light unit (2) in the region of the light-permeable window portion (12), wherein the signal light unit (2) has a longitudinal light guiding body and a number of assigned illuminants for illumination of an input coupling portion of the assigned illuminant, wherein the signal light unit furthermore has a housing (11) composed of thermoplastic material, said housing predefining an interior space for receiving at least one circuit board (9) and the number of illuminants (8), wherein the housing (11) is of two-part design and comprises two housing half-shells (11a, 11b), and wherein the housing (11) furthermore has a passage opening (22), and the light guiding body (10) is releasably retained in the passage opening (22) by way of a first end region having the input coupling portion (18), **characterized in that** the two housing half-shells (11a, 11b) are connected by means of a hinge arrangement and are embodied to be closable and openable by means of a clip connection, wherein the housing halves (11a, 11b) are provided with a seal (20) in the region of the mutually facing joining edges and wherein the passage opening (22) is provided with a seal, and wherein the housing (11) and the seals (20,-) are produced by a two-component injection-moulding process and the housing half-shells (11a, 11b) are made of a polypropylene and the seals (20) of the joining edges and the seal in the region of the through-opening (22) are made of a thermoplastic elastomer (TPE).

2. Vehicle exterior mirror (1) comprising integrated signal light unit (2) according to Claim 1, wherein the light guiding body (10) is configured with an output coupling structure.

3. Vehicle exterior mirror (1) comprising integrated signal light unit (2) according to either of the preceding claims, wherein a band-like element comprising a reflection layer, which is preferably embodied as a reflective film, is arranged on that region of the light guiding body (10) which is situated opposite the light-permeable window portion (12).

4. Method for producing a vehicle exterior mirror (1) comprising integrated signal light unit (2) according to Claim 1, having the following method steps:
a) producing a housing comprising two housing half-shells (11a, 11b) in an injection-moulding process, wherein the housing half-shells are embodied to be closable and openable by means of a hinge arrangement and clip connection applied by injection moulding, and wherein a housing half-shell (11b) is provided with a through-opening (22), and wherein seals are applied by injection moulding in a two-component injection-moulding process in the region of the joining edges of the housing half-shells (11a, 11b) and in the region of the through-opening (22);
c) providing a circuit board (9) with an illuminant (8) arranged thereon;
d) providing a light guiding body (10) with an input coupling portion (18) arranged at one end;
e) introducing the circuit board (9) with illuminant (8) into an interior space (17) which lies between the housing halves (11a, 11b);
f) closing the housing halves to form an air-tight housing (11) by means of the clip connection;
g) inserting the input coupling portion (18) of the light guiding body (10) into the through-opening.

## Revendications

1. Rétroviseur extérieur (1) de véhicule, ledit rétroviseur comprenant une unité formant lampe de signalisation intégrée (2) comportant une coque de boîtier (7) en matière thermoplastique, la coque de boîtier (7) comportant une portion de fenêtre transparente (12) et comprenant un espace intérieur destiné recevoir l'unité de lampe de signalisation (2) dans la zone de la portion de fenêtre transparente (12), l'unité formant lampe de signalisation (2) comportant un corps de guidage de lumière allongé et un certain nombre de moyens d'éclairage associés destinés à éclairer une portion d'injection par couplage du moyen d'éclairage associé, l'unité formant lampe de signalisation comportant en outre un boîtier (11) en matière thermoplastique, qui définit un espace intérieur destiné à recevoir au moins une carte de circuit imprimé (9) et le nombre de moyens d'éclairage (8), le boîtier (11) étant réalisé en deux parties et comprenant deux demi-coques de boîtier (11a, 11b), et le boîtier (11) comportant en outre une ouverture de passage (22), et le corps de guidage de lumière (10) étant maintenu de manière amovible dans l'ouverture de passage (22) au moyen d'une première zone d'extrémité comportant la portion d'injection par couplage (18), **caractérisé en ce que** les deux demi-coques de boîtier (11a, 11b) sont reliées par un ensemble formant charnière et sont réalisées de manière à pouvoir être ouvertes et fermées par le biais d'une liaison à clips, les moitiés de boîtier (11a, 11b) étant pourvues d'une garniture d'étanchéité (20) dans la zone des bords de jonction dirigés l'un vers l'autre, et l'ouverture de passage (22) étant pourvue d'une garniture d'étanchéité, et le boîtier (11) et les garnitures d'étanchéité (20,-) étant fabriqués par un procédé de moulage par injection à deux composants et les demi-coques de boîtier (11a, 11b) étant réalisées en polypropylène et les garnitures d'étanchéité (20) des bords de jonction et la garniture d'étanchéité située au niveau de l'ouverture de passage (22) étant réalisées en élastomère thermoplastique (TPE).

2. Rétroviseur extérieur (1) de véhicule, ledit rétroviseur comprenant une unité formant lampe de signalisation intégrée (2) selon la revendication 1, le corps de guidage de lumière (10) étant conçu avec une structure de sortie par couplage.

3. Rétroviseur extérieur (1) de véhicule, ledit rétroviseur comprenant une unité formant lampe de signalisation intégrée (2) selon l'une des revendications précédentes, un élément en forme de bande pourvu d'une couche réfléchissante, qui est de préférence conçue comme un film réfléchissant, étant disposé sur la zone du corps de guidage de lumière (10) qui est opposée à la portion de fenêtre transparente (12).

4. Procédé de fabrication d'un rétroviseur extérieur (1) de véhicule, ledit rétroviseur comprenant une unité formant lampe de signalisation intégrée (2) selon la revendication 1, le procédé comprenant les étapes suivantes :
a) fabriquer un boîtier comprenant deux demi-coques de boîtier (11a, 11b) par un procédé de moulage par injection, les demi-coques de boîtier étant conçues pour être fermées et ouvertes par le biais d'un ensemble formant charnière moulé par injection et d'une liaison à clip, et une demi-coque de boîtier (11b) étant pourvue d'une ouverture de passage (22), et, dans la zone des bords de jonction des demi-coques de boîtier (11a, 11b) et dans la zone de l'ouverture de passage (22), des garnitures d'étanchéité étant moulées par injection dans un procédé de moulage par injection à deux composants,
c) fournir une carte de circuit imprimé (9) pourvue d'un moyen d'éclairage (8) disposé dessus,
d) fournir un corps de guidage de lumière (10) pourvu d'une portion d'injection par couplage (18) disposée à l'extrémité,
e) introduire la carte de circuit imprimé (9) pourvue du moyen d'éclairage (8) dans un espace intérieur (17) qui est situé entre les moitiés de boîtier (11a, 11b),
f) fermer les moitiés de boîtier pour former un boîtier (11) étanche à l'air par le biais de la liaison à clip,
g) insérer la portion d'injection par couplage (18) du corps de guidage de lumière (10) dans l'ouverture de passage.
